# EUROPÄISCHE PATENTSCHRIFT

(11) **EP 1 416 097 B1**
(45) Veröffentlichungstag und Bekanntmachung des Hinweises auf die Patenterteilung: **08.11.2006**
(21) Anmeldenummer: 02405925.5
(22) Anmeldetag: 30.10.2002
(51) Int. Cl.: E03C 1/04, E03B 7/07, G01F 15/18, G01F 15/14, E03D 11/14

(54) **Anschlussvorrichtung für die wasserführende Verrohrung von Sanitätsinstallationen**
Connection device for water piping in sanitary installations
Dispositif de connection pour tuyau d'eau dans installations sanitaires

(43) Veröffentlichungstag der Anmeldung: 06.05.2004
(73) Patentinhaber: GEBERIT TECHNIK AG, 8645 Jona (CH)
(72) Erfinder: Zurfluh, Bruno, 6340 Baar (CH)
(74) Vertreter: Groner, Manfred

(56) Entgegenhaltungen:
- EP-A- 0 863 265
- DE-A- 2 637 749
- DE-A- 10 034 766
- DE-C- 19 617 112
- DE-U- 9 412 649
- DE-U- 29 907 075
- FR-A- 2 089 697
- US-A- 3 435 467
- US-A- 6 056 002

## Beschreibung

Die Erfindung betrifft eine Anschlussvorrichtung für die wasserführende Verrohrung von Sanitärinstallationen nach dem Oberbegriff des Anspruchs 1.

Die US 6,056,002 A offenbart ein Modul aus einem geschäumten Block, in dem zwei vormontierte Einheiten aus jeweils einer Messeinrichtung, einem Absperrventil und zwei Gewindestutzen eingeschäumt sind. Ebenfalls in den Block eingeschäumt sind zwei Befestigungselemente, die im Abstand zu den genannten Einheiten angeordnet sind. Die Montage von solchen geschäumten Modulen ist bei vielen Anwendungen nicht möglich oder nicht gewünscht.

Die DE 299 07 075 U offenbart eine Vorrichtung zum nachträglichen Einbau eines Fluidzählers in eine unter Druck stehende Rohrleitung. Vorgesehen sind hierzu zwei Absperrventile sowie ein Fluidzähler. Die Vorrichtung bildet keine vormontierte Baueinheit. Die beiden Absperrventile werden auf eine bestehende Leitung aufgesetzt und mit einem Fräskopf wird die Rohrleitung an zwei Stellen durchgetrennt. Das abgetrennte Zwischenrohrstück wird entfernt und anschliessend wird der Fluidzähler eingesetzt. Eine übliche Montage ist nicht vorgesehen.

Eine weitere Anschlussvorrichtung ist aus der DE 295 19 460 U1 bekannt geworden. Diese besteht aus einem Wasserzähler und einem in Strömungsrichtung vorgeschalteten Absperrventil. Zwischen dem Wasserzähler und dem Absperrventil ist ein Beruhigungsrohr zur Strömungsberuhigung angeordnet. Das Beruhigungsrohr ist einstückig an das Ventilgehäuse angeformt. Dadurch soll eine kostengünstigere Herstellung und Montage möglich sein.

Durch die DE 297 24 94 U1 ist eine Unterputzarmatur bekannt geworden, die eine Messuhr und ein Absperrventil aufweist. Das Gehäuse für das Absperrventil und das Gehäuse für die Aufnahme einer Messuhr sind einstückig ausgebildet. Auch dadurch soll die Herstellung und die Montage vereinfacht werden.

Durch die DE 299 07 075 U ist eine Vorrichtung zum nachträglichen Einbau eines Fluidzählers in eine Rohrleitung bekannt geworden. Es sind zwei Ventilarmaturen vorgesehen, die jeweils aus einem Oberteil und einem Unterteil bestehen. Diese Teile werden auf die bereits montierte Rohrleitung aufgesetzt und mit Hilfe von Schrauben oder Spannbändern miteinander verbunden.

Aus Dokument EP 0 949 383-A ist noch eine Anschlussvorrichtung für ein Absperrventil und einen Wasserzähler bekannt geworden.

Der Erfindung liegt die Aufgabe zugrunde, eine Anschlussvorrichtung der genannten Art zu schaffen, die eine noch einfachere und kostengünstigere Herstellung sowie Montage ermöglicht.

Die Aufgabe ist bei einer gattungsgemässen Anschlussvorrichtung gemäss Anspruch 1 gelöst.

Die erfindungsgemässe Anschlussvorrichtung ist somit eine Baueinheit, die wenigstens ein Absperrventil, eine Messvorrichtung und eine Anschlussarmatur aufweist. Die Baueinheit kann im Werk vorgefertigt und als Ganzes am Installationsort montiert werden. Das aufwändige Verbinden der Anschlussarmatur mit der Messvorrichtung am Montageort entfällt damit. Die notwendigen Anschlüsse sind bei der vormontierten Baueinheit bereits in der präzisen Lage und in der Position vorhanden. Der Arbeitsaufwand am Montageort ist damit wesentlich kleiner als bisher.

Die erfindungsgemässe Anschlussvorrichtung eignet sich insbesondere für die Unterputzinstallation und insbesondere für eine Unterputzinstallation mit einem Montagerahmen. Die erfindungsgemässe Anschlussvorrichtung wird an diesem Montagerahmen, auf Montageplatten befestigt. Die Montagearbeit beschränkt sich damit im Wesentlichen auf die Befestigung der Anschlussvorrichtung am Montagerahmen. Da wie erwähnt insbesondere die Anschlussarmatur bereits lagerichtig installiert ist, müssen dann lediglich noch die Zufuhrleitung und an der Anschlussarmatur die Anschlussleitung befestigt werden. Gegebenenfalls wird dann noch nach dem Befliesen eine Messuhr in das Messuhrgehäuse eingesetzt. Der Montagerahmen kann nun beplankt werden. Diese Installationsarbeit kann dank der vormontierten Baueinheit sehr schnell und präzise durchgeführt werden.

Nach einer Weiterbildung der Erfindung ist die Anschlussarmatur T-förmig ausgebildet und weist einen rechtwinkligen Anschluss für eine Armatur und einen Anschluss für die axiale Weiterleitung auf. Die Armatur ist beispielsweise ein Wasserhahn, der dann direkt an der vormontierten Baueinheit angeschlossen werden kann. Gleichzeitig dient die T-förmige Anschlussarmatur für den Anschluss der axialen Weiterleitung.

Die Herstellung ist besonders kostengünstig, da das Absperrventil und/oder die Anschlussarmatur steckbare Verbindungsmittel für den Wasserleitungsanschluss aufweisen. Dadurch kann die Herstellung der Baueinheit wesentlich vereinfacht werden.

Die Montage der erfindungsgemässen Anschlussvorrichtung wird besonders vereinfacht, da die Anschlussvorrichtung Mittel zu ihrer Befestigung auf einer oder mehreren Montageplatten aufweist. Die Mittel können beispielsweise Befestigungslaschen sein, die eine sehr einfache Befestigung der Anschlussvorrichtung am Montagerahmen bzw. auf den Montageplatten ermöglichen.

Gemäss einer Weiterbildung der Erfindung ist vorgesehen, dass die Anschlussarmatur und ein Distanzrohr einstückig ausgebildet sind. Damit lässt sich die Anzahl der Einzelteile noch weiter verkleinern.

Die Erfindung betrifft zudem einen Montagerahmen für die Unterputzinstallation mit einer erfindungsgemässen Anschlussvorrichtung. Dieser Montagerahmen weist wenigstens eine Montageplatte auf, an welcher die Anschlussvorrichtung befestigt ist. Der Montagerahmen ist nach rückwärts abgewinkelt, sodass die Anschlussvorrichtung im Abstand zur Frontebene des Montagerahmens angeordnet ist. Dies ermöglicht eine gute Zugänglichkeit zur Anschlussvorrichtung von der Frontseite sowie seitlich und von oben. Die Anschlussvorrichtung befindet sich dann somit zwischen der Gebäudewand und der Frontseite des Montagerahmens.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine schematische Ansicht einer erfindungsgemässen Anschlussvorrichtung montiert an einem Montagerahmen und
- Figur 2: eine Seitenansicht der Anschlussvorrichtung und des Montagerahmens.

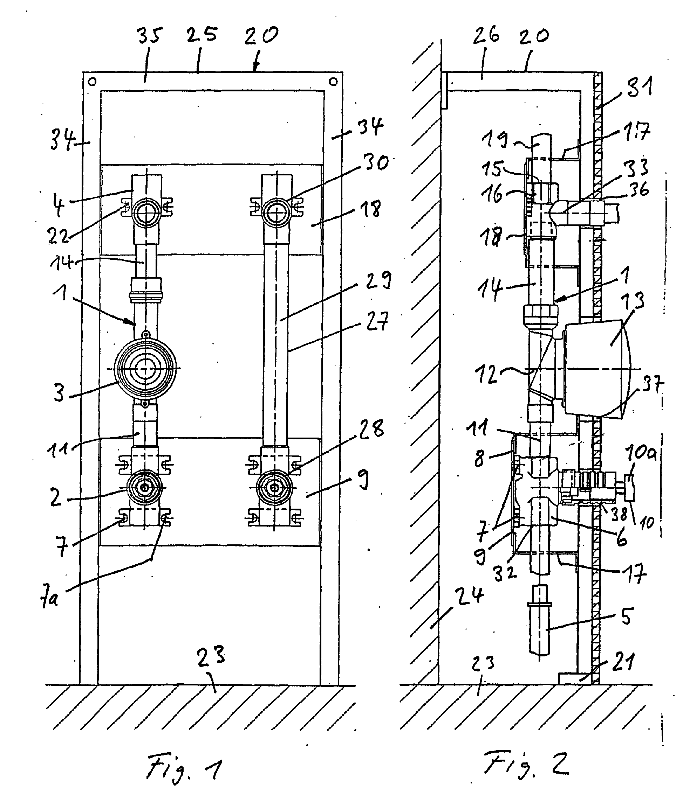

Die in den Figuren 1 und 2 gezeigte Anschlussvorrichtung 1 bildet eine Baueinheit und besteht wenigstens aus einem Absperrventil 2, einer Messvorrichtung 3 sowie einer Anschlussarmatur 4. Zwischen dem Absperrventil 2 und der Messvorrichtung 3 ist üblicherweise ein Beruhigungsrohr 11 angeordnet. Zwischen der Messvorrichtung 3 und der Anschlussarmatur 4 befindet sich ein Distanzrohr 14. Das Beruhigungsrohr 11 kann einstückig an einem Gehäuse 12 der Messvorrichtung 3 angeformt sein. Denkbar ist hier aber auch eine andere Verbindung, beispielsweise eine Schraub- oder Steckverbindung. Das Distanzrohr 14 kann einstückig an einem Gehäuse 16 der Anschlussarmatur 4 angeformt sein. Denkbar ist aber auch hier eine andere Verbindung, beispielsweise eine Steck- oder Schraubverbindung.

Die Messvorrichtung 3 ist insbesondere eine Wasserzähluhr, die ein Gehäuse 12 sowie eine Bauschutzkappe 13 aufweist. Der Messeinsatz der Wasserzähluhr, welche in das Gehäuse 12 eingesetzt ist, ist hier nicht dargestellt. Solche Wasser zähluhren sind an sich bekannt.

Das Absperrventil 2 besitzt ein Gehäuse 6, an dem gemäss Figur 2 von unten ein zuführendes Leitungsrohr 5 angeschlossen ist. Vorzugsweise wird das Leitungsrohr 5 mit einer Steckverbindung 32 am Absperrventil 2 angeschlossen. Das Gehäuse 6 nimmt einen Ventileinsatz 10 auf, der in üblicher Weise einen Drehgriff 10a besitzt.

Die Anschlussarmatur 4 weist als Gehäuse einen T-förmigen Fitting 16 auf, an den von oben ein weiterführendes Leitungsrohr 19 angeschlossen ist. Das Leitungsrohr 19 wird vorzugsweise mit einer Steckverbindung 15 an der Anschlussarmatur 4 angeschlossen. Rechtwinklig dazu verläuft ein Anschlussstutzen 33, an dem beispielsweise ein Wasserhahn angeschlossen werden kann.

Am Gehäuse 6 des Absperrventils 2 und am Gehäuse 16 der Anschlussarmatur 4 sind Befestigungselemente 7 bzw. 22 angeordnet, welche eine Befestigung der Anschlussvorrichtung 1 auf Montageplatten 9 und 18 ermöglichen. Beispielsweise weisen die Befestigungselemente 7 gemäss Figur 1 Ausnehmungen 7a auf, die eine Befestigung mit hier nicht gezeigten Befestigungsschrauben ermöglichen. Vorzugsweise sind zwei Befestigungsplatten 9 und 18 vorgesehen, die beispielsweise aus Blech hergestellt sind, und die jeweils mit Distanzteilen 17 an einem Gestell 25 eines Montagerahmens 20 befestigt sind. Das Gestell 25 ist gemäss Figur 1 U-förmig ausgebildet und besitzt zwei vertikale Stangen 34, die oben von einer Traverse 35 miteinander verbunden sind. Die Stangen 34 und die Traverse 35 befinden sich in einer Ebene, die sich im Abstand zu einer Gebäudewand 24 befindet und sich parallel zu dieser erstreckt. Die beiden Montageplatten 9 und 18 sowie die Anschlussvorrichtung 1 befinden sich wie ersichtlich hinter dieser Ebene. Der Montagerahmen 20 ist gemäss Figur 2 mit Füssen 21 an einem Gebäudeboden 23 und mit Wandstützen 26 an der Gebäudewand 24 befestigt.

Neben der Anschlussvorrichtung 1 ist auf den Montageplatten 9 und 18 eine weitere Anschlussvorrichtung 27 befestigt, die ein Absperrventil 28, ein Distanzrohr 29 sowie eine Anschlussarmatur 30 besitzt. Diese Anschlussvorrichtung 27 ist vorzugsweise ebenfalls eine Baueinheit. Die zweite Baueinheit kann aber auch gleich oder ähnlich ausgebildet sein wie die oben erläuterte Anschlussvorrichtung 1. Die Anschlussvorrichtung 27 kann somit ebenfalls eine Messvorrichtung 3 aufweisen, die aber nicht zwingend eine Wasserzähluhr ist.

Nachfolgend wird der Montagevorgang näher erläutert.

In einem ersten Schritt wird der Montagerahmen 20 auf dem Gebäudeboden 23 und an der Gebäudewand 24 befestigt. Anschliessend werden am Montagerahmen 20 die beiden Montageplatten 9 und 18 mit den Befestigungselementen 7 angebracht. Die Platten 9 und 18 können aber auch am Montagerahmen 20 vormontiert sein. Nun werden die Anschlussvorrichtungen 1 und 27 am Montagerahmen 20 befestigt, indem sie auf die Montageplatten 9 und 18 aufgeschraubt werden. Nun wird von unten die Leitung 5 und von oben die Leitung 19 angeschlossen.

Nun wird der Montagerahmen 20 beplankt, indem beispielsweise eine Gipskartonplatte 31 mit entsprechenden Ausnehmungen 36, 37 und 38 für die Anschlussarmatur 4, die Messvorrichtung 3 und das Absperrventil 2 angebracht. Schliesslich werden der Ventileinsatz 10, und der hier nicht gezeigte Messeinsatz in das Gehäuse 6 bzw. 12 eingesetzt. Schliesslich wird am Fitting 16 die gewünschte Armatur, beispielsweise ein hier nicht gezeigter Wasserhahn angeschlossen.

## Patentansprüche

1. Anschlussvorrichtung (1) für die wasserführende Verrohrung von Sanitärinstallationen, insbesondere Unterputzinstallationen, mit wenigstens einer Messvorrichtung (3), insbesondere einer Wasserzähluhr, und einem Absperrventil (2), wobei die Messvorrichtung (3), das Absperrventil (2) und eine Anschlussarmatur (4) eine vormontierte Baueinheit bilden, und das Absperrventil (2) und/oder die Anschlussarmatur (4) Mittel (7, 22) für ihre Befestigung auf einer Montageplatte (9, 18) aufweisen, **dadurch gekennzeichnet, dass** dass das Absperrventil (2) und/oder die Anschlussarmatur (4) mittels einer Steckverbindung (32 bzw. 15) mit einer Zufuhrleitung (5) und einer wegführenden Leitung (19) verbindbar sind und dass hierzu das Absperrventil (2) und/oder die Anschlussarmatur (4) steckbare Verbindungsmittel aufweisen bzw. aufweist.

2. Anschlussvorrichtung nach Anspruch 1, **dadurch gekennzeichnet, dass** die Messvorrichtung (3), das Absperrventil (2) und die Anschlussarmatur lösbar oder fest miteinander verbunden sind.

3. Anschlussvorrichtung nach Anspruch 1 oder 2, **dadurch gekennzeichnet, dass** zwischen dem Absperrventil (2) und der Messvorrichtung (3) ein Beruhigungsrohr (11) angeordnet ist.

4. Anschlussvorrichtung nach einem der Ansprüche 1 bis 3, **dadurch gekennzeichnet, dass** zwischen der Messvorrichtung (3) und der Anschlussarmatur (4) ein Distanzrohr (14) angeordnet ist.

5. Anschlussvorrichtung nach einem der Ansprüche 1 bis 4, **dadurch gekennzeichnet, dass** die Messvorrichtung (3) ein Gehäuse (12) für einen Messeinsatz aufweist.

6. Montagerahmen mit einer Anschlussvorrichtung gemäss Anspruch 1, **dadurch gekennzeichnet, dass** der Montagerahmen wenigstens eine Montageplatte (9, 18) aufweist, auf welcher die Anschlussvorrichtung (1) befestigt ist.

7. Montagerahmen gemäss Anspruch 6, **dadurch gekennzeichnet, dass** die wenigstens eine Montageplatte (9, 18) an einem Traggestell (25) befestigt ist.

8. Montagerahmen gemäss Anspruch 7, d**adurch gekennzeichnet, dass** das Traggestell (25) zwei vertikale Stangen (34) aufweist, und dass die wenigstens eine Montageplatte (9, 18) im Abstand zu diesen Stangen (34) im montierten Zustand an einer Wand (24), hinter diesen Stangen (34) angeordnet ist, und dass die Anschlussvorrichtung (1) auf der Vorderseite dieser Montageplatte (9, 18) befestigt ist.

9. Montagerahmen nach einem der Ansprüche 6 bis 8, **dadurch gekennzeichnet, dass** die Anschlussvorrichtung (1) im montierten Zustand an einer Wand (24) so angeordnet ist, dass eine Zufuhrleitung (5) von unten und eine wegführende Leitung (19) von oben anschliessbar ist.

## Claims

1. Connector system (1) for water-carrying pipework of sanitary installations, in particular concealed installations, with at least one measuring device (3), in particular a water meter, and a shut-off valve (2), which measuring device (3), shut-off valve (2) and a connector fitting (4) form a preassembled component unit, and the shut-off valve (2) and/or the connector fitting (4) has or have means (7, 22) for securing them to a mounting plate (9, 18), **characterised in that** the shut-off valve (2) and/or the connector fitting (4) can be connected by means of a plug-in connection (32 respectively 15) to an inlet pipe (5) and an onward pipe (19) and to this end, the shut-off valve (2) and/or the connector fitting (4) has or have plug-in connection means.

2. Connector system as claimed in claim 1, **characterised in that** the measuring device (3), the shut-off valve (2) and the connector fitting are releasably or permanently connected to one another.

3. Connector system as claimed in claim 1 or 2, **characterised in that** a settlement pipe (11) is disposed between the shut-off valve (2) and the measuring device (3).

4. Connector system as claimed in one of claims 1 to 3, **characterised in that** a spacer pipe (14) is disposed between the measuring device (3) and the connector fitting (4).

5. Connector system as claimed in one of claims 1 to 4, **characterised in that** the measuring device (3) has a housing (12) for measuring equipment.

6. Mounting frame with a connector system as claimed in claim 1, **characterised in that** the mounting frame has at least one mounting plate (9, 18) to which the connector system (1) is secured.

7. Mounting frame as claimed in claim 6, **characterised in that** the at least one mounting plate (9, 18) is secured to a support frame (25).

8. Mounting frame as claimed in claim 7, **characterised in that** the support frame (25) has two vertical bars (34) and the at least one mounting plate (9, 18) is disposed on a wall (24) behind these bars (34) and at a distance from these bars (34) in the fitted state, and the connector system (1) is secured to the front face of this mounting plate (9, 18).

9. Mounting frame as claimed in one of claims 6 to 8, **characterised in that**, in the fitted state, the connector system (1) is disposed on a wall (24) so that an inlet pipe (5) can be connected from underneath and an onward pipe (19) can be connected from above.

## Revendications

1. Dispositif de raccordement (1) pour les canalisations d'eau d'installations sanitaires, notamment des installations encastrées, comprenant au moins un dispositif de mesure (3), notamment un compteur d'eau, et une soupape d'arrêt (2), le dispositif de mesure (3), la soupape d'arrêt (2) et une garniture de raccordement (4) formant une unité constructive prémontée, et la soupape d'arrêt (2) et/ou la garniture de raccordement (4) présentant des moyens (7, 22) pour leur fixation sur une plaque de montage (9, 18), **caractérisé en ce que** la soupape d'arrêt (2) et/ou la garniture de raccordement (4) peuvent être connectées au moyen d'un raccord à fiche (32, respectivement 15) à une conduite d'amenée (5) et une conduite d'évacuation (19) et **en ce qu'**à cet effet la soupape d'arrêt (2) et/ou la garniture de raccordement (4) présente(nt) des moyens de connexion enfichables.

2. Dispositif de raccordement selon la revendication 1, **caractérisé en ce que** le dispositif de mesure (3), la soupape d'arrêt (2) et la garniture de raccordement sont connectés les uns aux autres de manière desserrable ou fixe.

3. Dispositif de raccordement selon la revendication 1 ou 2, **caractérisé en ce qu'**entre la soupape d'arrêt (2) et le dispositif de mesure (3) est disposé un tube de tranquillisation (11).

4. Dispositif de raccordement selon l'une quelconque des revendications 1 à 3, **caractérisé en ce qu'**entre le dispositif de mesure (3) et la garniture de raccordement (4) est disposé un tube d'espacement (14).

5. Dispositif de raccordement selon l'une quelconque des revendications 1 à 4, **caractérisé en ce que** le dispositif de mesure (3) présente un boîtier (12) pour un élément de mesure.

6. Cadre de montage comprenant un dispositif de raccordement selon la revendication 1, **caractérisé en ce que** le cadre de montage présente au moins une plaque de montage (9, 18) sur laquelle est fixé le dispositif de raccordement (1).

7. Cadre de montage selon la revendication 6, **caractérisé en ce que** l'au moins une plaque de montage (9, 18) est fixée sur un bâti porteur (25).

8. Cadre de montage selon la revendication 7, **caractérisé en ce que** le bâti porteur (25) présente deux barres verticales (34) et **en ce que** l'au moins une plaque de montage (9, 18) est disposée à distance de ces barres (34) dans l'état monté sur une paroi (24), derrière ces barres (34), et **en ce que** le dispositif de raccordement (1) est fixé du côté avant de cette plaque de montage (9, 18).

9. Cadre de montage selon l'une quelconque des revendications 6 à 8, **caractérisé en ce que** le dispositif de raccordement (1) est disposé dans l'état monté sur une paroi (24) de telle sorte qu'une conduite d'amenée (5) puisse être raccordée par le bas et qu'une conduite d'évacuation (19) puisse être raccordée par le haut.
